Europäisches Patentamt

European Patent Office

Office européen des brevets

(11) Veröffentlichungsnummer : **0 076 871**
**B1**

# EUROPÄISCHE PATENTSCHRIFT

(45) Veröffentlichungstag der Patentschrift :
26.06.85

(51) Int. Cl.⁴ : **C 11 B   1/10, B 01 D  11/00**

(21) Anmeldenummer : **81108211.4**

(22) Anmeldetag : **12.10.81**

(54) Vorrichtung und Verfahren zur kontinuierlichen Fest-Flüssig-Extraktion.

(43) Veröffentlichungstag der Anmeldung :
**20.04.83 Patentblatt 83/16**

(45) Bekanntmachung des Hinweises auf die Patenterteilung : **26.06.85 Patentblatt 85/26**

(84) Benannte Vertragsstaaten :
**AT BE CH DE FR GB IT LI LU NL SE**

(56) Entgegenhaltungen :
**DE-A- 1 617 004**
**US-A- 2 587 556**
**US-A- 3 529 938**

(73) Patentinhaber : **Schumacher, Heinz**
**Höperfeld 26**
**D-2050 Hamburg 80 (DE)**

(72) Erfinder : **Schumacher, Heinz**
**Höperfeld 26**
**D-2050 Hamburg 80 (DE)**

(74) Vertreter : **Glaeser, Joachim, Dipl.-Ing. et al**
**Dr. M. Kohler Dipl.-Ing. C. Gernhardt Dipl.-Ing. J.**
**Glaeser Königstrasse 28**
**D-2000 Hamburg 50 (DE)**

**Beschreibung**

Gegenstand der Erfindung ist eine Vorrichtung und ein Verfahren zur Fest-Flüssig-Extraktion, wie sie z. B. bei pflanzlichen Rohstoffen zur Gewinnung von Fetten und Ölen, Aromastoffen, Arzneimittelwirkstoffen, Naturprodukten, Zuckerlösungen usw. Anwendung findet. Insbesondere vorteilhaft kann die Erfindung — ohne ihren Anwendungsbereich hierdurch einzuschränken — bei der Lösemittelextraktion von Ölsaaten und Ölfrüchten eingesetzt werden, wobei die aus dem vorwiegend festen Rohmaterial extrahierten Glyzeridbestandteile (Öle und Fette) in die flüssige Phase, die sogenannte Miscella, übergehen.

Als Extraktionsmittel für Ölsaaten und Ölfrüchte werden im praktischen Betrieb fast ausschließlich Benzin, Hexan, Heptan, Octan oder deren Gemische mit Siedegrenzen von 60°-100 °C eingesetzt. Diese relativ niedrig siedenden Extraktionsmittel stellen hohe Anforderungen an den konstruktiven Aufwand sowohl der Vorrichtungen als auch der Verfahren. Der Aufwand betrifft die Sicherheit des mit den Lösemitteln in Berührung kommenden Wartungs- und Betriebspersonals und eine optimale Betriebsführung, damit sich die Extraktion in wirtschaftlich vertretbaren Grenzen hält.

Vorrichtungen und Verfahren für kontinuierlich arbeitende Extraktionsprozesse in einer oder mehreren Stufen sind weitgehend bekannt und werden in einer einschlägigen Fachliteratur ausführlich abgehandelt. Geeignete Vorrichtungen sind z. B. die vertikal angeordneten Extraktionstürme mit oder ohne Rührelemente, horizontal ausgerichtete Rahmenband-Extrakteure, Topf-, Schnecken-, Becherwerksoder auch Korbextrakteure. Derartige Vorrichtungen werden z. B. in FR-A-10 20 991, in GB-A-11 61 945 oder in DE-A-16 17 004 und DE-A-11 49 232 beschrieben.

Insbesondere bei der Extraktion pflanzlicher Rohstoffe wie Ölsaaten und Ölfrüchte, auf die nachstehend beispielhaft besonders Bezug genommen wird, arbeiten die meisten der bekannten Vorrichtungen im Gegenstrom, d. h., das frische Extraktionsmittel wird zur Schlußspülung des bereits weitgehend extrahierten Materials eingesetzt. Dabei können dieser Endphase der Extraktion weitere Extraktionsstufen vorausgehen, so daß schließlich eine Miscella (flüssige Phase) anfällt, die je nach Extrakteur-Typ etwa 15-35 Gew.% Öl und 85-65 Gew.% Lösemittel enthält.

Man gibt dem Rohmaterial im allgemeinen soviel Frisch-Lösemittel zu, wie — gewichtsmäßig — Festmaterial eingesetzt wird.

Dieses Mengenverhältnis von Lösemittel zu festem Rohmaterial von etwa 1 : 1 ist z. B. dann immer der Fall, wenn etwa bei der Sojabohnen-Direktextraktion oder bei der Extraktion von Presskuchen anderer Ölsaaten und Ölfrüchte nach dem sogenannten Perkolationsverfahren in Rahmenband-, Becherwerks- oder Korbextrakteuren gearbeitet wird. Hingewiesen sei in diesem Zusammenhang auf FR-A-10 20 991, GB-A-11 61 945 oder DE-A-16 17 004.

Bei mehreren Extraktionsstufen ist es notwendig, in jeder Einzelstufe die gewonnene Miscella im Kreis zu führen, da das zu Beginn in den Extrakteur eingebrachte Lösemittel allein nicht ausreicht, eine optimale Benetzung des zu extrahierden Materials zu gewährleisten.

Dies hat seinen Grund darin, daß das Perkolationsvermögen der zu extrahierenden Rohmaterialien vielfach erheblich größer ist als es der Wirkung der relativ kleinen Menge an frischem Lösemittel zu Beginn der Extraktion entspricht. Es erfolgt nämlich am Ort der Zugabe des frischen Lösemittels nur bedingt eine einheitliche und vollkommene Benetzung, vielmehr bilden sich bald Kanäle aus, durch die das Lösemittel ungenutzt hindurchperkoliert.

Daß man die Lösemittelmenge auf ein Verhältnis zum Rohmaterial von etwa 1 : 1 begrenzt, obwohl für eine gute Benetzung erheblich mehr Lösemittel erforderlich wäre, hat vorwiegend wirtschaftliche Gründe wie eingangs bereits erwähnt. Bei höherem Lösemittelanteil würden die Kosten und der Apparateaufwand für die anschließende Destillation der Miscella, d. h. für die Trennung von Lösemittel und extrahiertem Gut, z. B. Öl, beträchtlich ansteigen und die Rentabilität des Gesamtverfahrens infrage stellen.

Um trotzdem eine einheitliche und ausreichende Benetzung des zu extrahierenden Rohmaterials in der Extraktionsphase bzw. in den nacheinander folgenden Stufen einer Mehrstufenextraktionsanlage zu ermöglichen, werden erhebliche Miscellamengen in der Größenordnung etwa des drei- bis fünffachen der aufgegebenen Frisch-Lösungsmittelmenge laufend umgepumpt. Dabei wird eine Überflutung des eingebrachten Guts durch umgepumpte Miscella angestrebt und vielfach auch realisiert.

Diese Überflutung allein gewährleistet, daß innerhalb einer Extraktionszone bzw. -kammer eine gleich- mäßige Benetzung und damit Perkolation erwartet werden kann.

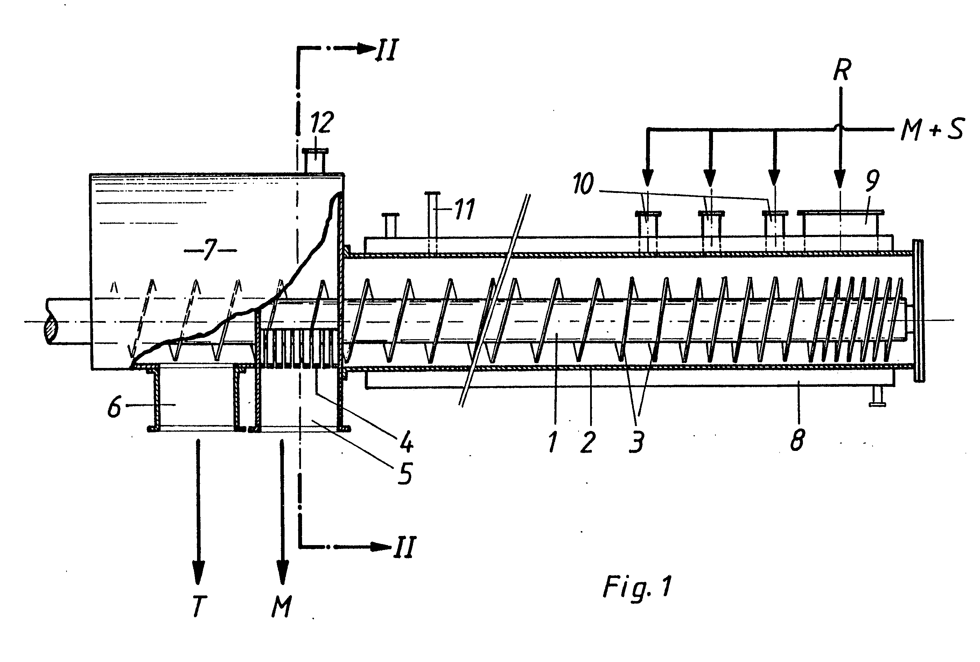

Die hier angesprochenen Maßnahmen werden z. B. von W. Kehse in Chemiker-Zeitung/Chemische Apparatur/Verfahrenstechnik, 94 (1970), Seiten 56-62 beschrieben. Durch Umpumpen der Miscella nur im Bereich einzelner Extraktionskammern werden letztere immer auf einem bestimmten Flüssigkeitsstand gehalten, während von Kammer zu Kammer die Miscella allein durch Überlauf weitergeführt wird. Wie die Abbildungen 1 und 8 (l. c.) verdeutlichen, tritt das Lösemittel in die letzte Kammer ein und strömt dem zu extrahierenden Gut von Stufe zu Stufe entgegen. Erst in der letzten Stufe bzw. Kammer wird ein optimaler Extraktgehalt (Ölgehalt) in der Miscella erreicht. Der Einsatz von quasi auf der Stelle arbeitenden Pumpen, die vielfach eine erheblich größere Leistung aufweisen als es der zu fördernden Miscellamenge genügen würde, ist mit erheblichem Energie- und Apparateaufwand verbunden.

Es ist daher eine erste Aufgabe der Erfindung, den umständlichen, zeit- und energieintensiven sowie überdimensioniertem Apparateaufwand der allein der Benetz-ung des Extraktionsguts dienenden Umwählzpumpen innerhalb einer Extraktionseinheit zu umgehen.

Bekanntlich folgt die der Extraktion zugrunde liegende Diffusion einem thermodynamischen Ausgleichsvorgang, der ohne Arbeitsleistung und isotherm verläuft.

Die Diffusion kann durch das 1. und 2. Fick'sche Gesetz beschrieben werden, die für den Fall, daß die Konzentration (c) nur von einer Ortskoordinaten (x) abhängt, folgendermaßen lautet

$$m = D \, (dc/dx) \quad \text{(1. Fick'sches Gesetz)}$$

mit

m = Stoffstromdichte ($kg/m^2/h$)
c = Konzentration
D = Diffusionskoeffizient während bei konzentrationsunabhängigem D die Zeit (t) einzuschließen ist :

$$c/t = D \, (d^2c/dx^2) \quad \text{(2. Fick'sches Gesetz)}$$

Hiernach ist somit die Geschwindigkeit der Diffusion proportional dem Konzentrationsgefälle einer Extraktionszeiteinheit, d. h., je geringer das Extraktionsmittel (Lösemittel) mit Extrakt (Miscella) angereichert ist, umso größer ist der Diffusionskoeffizient und damit die Geschwindigkeit der Extraktion. Oder mit anderen Worten, es nähert sich der Extraktionsgrad

$$(\text{Extrakt im Extr'gut} - \text{Extrakt im Extr'rückstand})/(\text{Extrakt im Extraktionsgut}) \times 100$$

einem Endwert, dessen Zeitintervall vom Diffusionsvermögen des Lösemittels bestimmt wird, wobei das Diffusionsvermögen umgekehrt proportional der Konzentration von Extrakt (z. B. Öl) im Lösemittel ist.

Die Erfordernisse der Fick'schen Gesetze setzen natürlich im praktischen Betrieb eine vollkommene Benetzung des Extraktionsguts voraus, die jedoch aufgrund des ungünstigen Mengenverhältnisses Lösemittel/Extraktionsgut vom reinen Lösemittel allein nicht erreicht werden kann (praktisches Mengenverhältnis Lösemittel/Extraktionsgut etwa 1 : 1).

Man ist deshalb gezwungen, durch Zusatz bereits angereicherter Miscella (angereichertes Lösemittel) zum frischen Lösemittel den Flüssigkeitsanteil im Gemisch Lösemittel/Extraktionsgut zu erhöhen und außerdem — wie eingangs geschildert — durch Umpumpen innerhalb Extraktionseinheit eine ausreichende Benetzung herbeizuführen.

Derartige Maßnahmen stören jedoch — wie vorstehend abgeleitet — die Erfüllung der Fick'schen Gesetze und sind somit wenig geeignet, innerhalb eines vertretbaren Zeitintervalls einen optimalen betrieblichen Extraktionswirkungsgrad zu erzielen.

Es ist daher eine weitere Aufgabe der Erfindung, eine gleichmäßige und vollständige Benetzung des Extraktionsguts insbes. bei der Mehrstufenextraktion durch die Miscella nur der Vorstufe und ohne Vermischung mit Miscella einer nachfolgenden Stufe und ohne Umwälzung der Miscella innerhalb einer Einzelstufe zu erzielen.

Dies. führt zu einer erheblichen Verkürzung der Extraktionszeit. Die meisten ber bisher bekannt gewordenen, apparatetechnisch sehr aufwendigen Extrakteure haben den Nachteil, daß sie wirtschaftlich nur großvolumig betrieben werden können, daß sie hohe Wartungsinvestionen erfordern, daß sie kaum die Möglichkeit einer Kapazitätsvariierung erlauben und daß das extrahierte Gut, im speziellen Fall bei pflanzlichen Rohstoffen der Schrot, noch erhebliche Anteile an Lösemittel, vorwiegend 30 % und mehr, enthält.

Diese Nachteile gelten nicht nur für die großräumigen Karussel-, Korbband-, Rahmenband- und Becherwerksextrakteure, sondern auch für die mit kleineren Kapazitäten arbeitenden Korb- oder Trommelextrakteure. Zwar lassen letztere auch den Durchsatz kleinerer Mengen an Extraktionsgut und Lösemittel zu, sie verursachen dafür aber aufgrund des umständlichen, chargenweise notwendigen Öffnens, Entleerens, Füllens, Verschließens usw. bei diskontinuierlichem Betrieb erhebliche technische Probleme.

Wie bereits gesagt, ist ein die Stoff- und Energiebilanz großvolumiger Extrakteure negativ beeinflussenden Faktor insbesondere im schlechten Verhältnis von Lösemittel in der Miscella zum Lösemittel im extrahierten Schrot zu sehen. In vielen bekannt gewordenen Fällen kann der « ausextrahierte Schrot » sogar 40 % Lösemittel enthalten, das nicht nur zur Verdünnung der Miscella (Benetzung des Extraktionsguts) fehlt, sondern auch in einem nachgeschalteten Prozeß bei erheblichem Energieaufwand aus dem Schrot zurückgewonnen werden muß.

Eine Reduzierung des Lösemittelanteils im Schrot hat daher auf die Kapazität der Folgeeinheiten (Desolventizer, Toaster usw.) einen erheblichen Einfluß. Außerdem verbessert sie den Wärmehaushalt der Gesamtanlage, da mit der Lösemittelverminderung im Schrot die Einsparung von Dampf in der Entbenzinierung (Austreibung des Lösemittels aus dem Schrot) parallel läuft.

Eine weitere Aufgabe der Erfindung besteht daher in der Behebung der den großvolumigen Extrakteuren eigenen Nachteile in bezug auf den Lösemittelgehalt im Schrot und dessen Rückgewinnung.

Die US-A-2 587 556 beschreibt eine Vorrichtung zur kontinuierlichen Fest-Flüssig-Extraktion, die aus einer in einem Behälter angeordneten, in Förderrichtung ansteigend ausgerichteten Förderschnecke besteht, bei der die Gänge der Schnecke am Ort des Eingangs des Extraktionsguts einen kleinsten Gangabstand aufweisen, der sich in Richtung des Ausgangs des Extraktionsguts gruppenförmig erweitert. Im Abstand vom Ausgang des Extraktionsguts befindet sich ein Siebboden, durch den der Extrakt ablaufen kann. Die bekannte Vorrichtung arbeitet im Gegenstrom.

Die Benetzung des Extraktionsguts erfolgt durch Vermischen mit Flüssigkeit in einer zweiten Schnecke, die das Gemisch im Gleichstrom in die Extraktionseinheit führt, wo dann im Gegenstrom hierzu Extraktionsmittel strömt.

Gegenstand der Erfindung ist eine Vorrichtung zur kontinuierlichen Extraktion insbesondere pflanzlicher Rohstoffe mit organischen Lösemitteln. Die neue Vorrichtung (Extrakteur) arbeitet nach dem Prinzip einer Transportschnecke im Gleichstrom von Extraktionsgut und Extraktionsmittel (Lösemittel). Der neue Extrakteur ist aber durch gravierende Konstruktionselemente von einem einfachen Schneckensystem unterschieden. Es ist so aufgebaut, daß sich die Schneckengänge, beginnend am Ort des Eintrags des Extraktionsguts in Richtung zum Austrag stetig erweitern.

Der Gangabstand erreicht beim Materialaustrag den größten Wert.

Die Schnecke bewegt sich in einem geschlossenen Trog oder einer geschlossenen Wanne, die kurz vor dem Materialaustrag einen siebartigen oder perforierten Bodenteil aufweisen. Bei runden Trögen bzw. Wannen kann dieser siebartige oder perforierte Bodenteil 60-75 % des Wanneumfangs betragen.

Es hat sich als zweckmäßig erwiesen, obwohl dies nicht obligatorisch ist, wenn über die Schneckenlänge zusätzliche Rührelemente für eine additive Durchmischung des Inhalts des Extrakteurs sorgen.

Die Schnecke selbst hat zum Schneckenboden einen Abstand von wenigen Millimetern bis zur Größenordnung eines Zentimeters ; dagegen kann der Abstand zum Oberteil des Trogs bzw. Wanne um ein Vielfaches größer sein.

In den Trog bzw. Wanne münden vorwiegend in senkrechter, ggf. auch in schräger Ausrichtung mehrere Rohranschlüsse zur Einbringung von Lösemittel und/oder Miscella. Diese Rohranschlüsse können über die gesamte Länge der Schnecke verteilt sein, sie sind jedoch im ersten Drittel der Schnecke, also im Bereich des Eintrags des Extraktionsguts, dichter hintereinander gesetzt.

Die Erfindung betrifft daher eine vorrichtung zur kontinuierlichen Extraktion insbesondere ölhaltiger pflanzlicher Rohstoffe mit organischen Lösemitteln, bestehend aus einer in einem Behälter angeordneten Förderschnecke, die horizontal oder in Förderrichtung ansteigend ausgerichtet ist deren Schneckengänge (3) am Ort des Eingangs des Extraktionsguts (R) den kleinsten Abstand aufweisen, der sich in Richtung des Ausgangs des extrahierten Guts erweitert und an diesem Ausgang den größten Wert aufweist, und wobei der Ablauf des Extrakts aus dem die Schnecke aufnehmenden Behälter (2) über eine Siebeinrichtung erfolgt, dadurch gekennzeichnet, daß sich der Abstand der Gänge (3) der Schnecke (1) in Förderrichtung der Schnecke stetig erweitert, daß ferner das Austragsorgan (6) für das extrahierte Gut im Bereich des größten Abstands der Schneckengänge (3) angeordnet ist und unmittelbar vor dem Austragsorgan (6) ein Teil (4) des Bodens der Schneckenwanne (2) siebartig oder perforiert ausgebildet ist, und dieser Teil (4) mit einer Ableitung (5) für den Extrakt bzw. die Miscella in unmittelbarer Verbindung steht, und daß die allseitig geschlossene Schneckenwanne (2), beginnend beim Eingang des Extraktionsguts (R) in Förderrichtung der Schnecke eine Vielzahl von Anschlußstutzen (10) für Lösemittel und/oder Miscella (M + S) aufweist, die entweder nacheinander in Reihe oder schräg gegenüberliegend, sowie im ersten Drittel der Schnecke gegenüber den beiden verbleibenden Dritteln der Schnecke dichter hintereinander angeordnet sind.

Weiter betrifft die Erfindung eine Anlage zur kontinuierlichen Extraktion insbesondere ölhaltiger pflanzlicher Rohstoffe mit organischen Lösemitteln, dadurch gekennzeichnet, daß mindestens zwei Extraktionseinheiten gemäß einem der Ansprüche 1 bis 4 im Verbund hinter- bzw. untereinander geschaltet sind, wobei der Ausgang (6) des Extraktionsguts der ersten Extraktionseinheit (e1) in den Eingang für Extraktionsgut der nachfolgenden Extraktionseinheit (e2...) mündet und die Miscella aller einzelnen Extraktionseinheiten (e1, e2, e3, e4...) getrennt voneinander über Leitungen (m1, m2, m3, m4...) mit den Teilkammern einer Vorlage (20) oder mit einzelnen, voneinander getrennten Vorlagen in Verbindung steht, und die Teilkammern bzw. Vorlagen der Leitungen (m1, m2, m3,...) über Pumpen (p1, p2, p3...) mit den Rückführleitungen (m1', m2', m3'...) zu den Extraktionseinheiten (e3, e2, e1...) in Verbindung stehen, während die Teilkammer bzw. Vorlage der Leitung (m4) zur Miscellaaufbereitung (M) weiterleitet.

Bei einer Anlage mit mehreren Extraktionseinheiten gemäß der Erfindung mündet der Ausgang für Extraktionsgut einer vorhergehenden Einheit in den Eingang für Extraktionsgut der nachfolgenden Einheit usw., so daß sich ein kontinuierlicher Fluß des Extraktionsguts durch die gesamte Anlage ergibt. Die in den einzelnen Extraktionseinheiten anfallende Miscella, die ja — bedingt durch die besondere Konstruktion des neuen Extrakteurs, bzw. dessen siebartigem bzw. perforiertem Bodenteil — bereits im Extrakteur vom Extraktionsgut getrennt wurde, wird ohne Vermischung mit Miscellen anderer Ex-

# 0 076 871

traktionseinheiten in einem Behälter mit mehreren Teilkammern oder in saparaten Vorlagen aufgefangen und in die jeweils vorausgehende Extraktionseinheit im Kreis geführt.

Produktmiscella, also Extrakt zur Weiterverarbeitung (Trennung Öl/Lösemittel) wird grundsätzlich aus der ersten Extraktionseinheit einer Mehreinheiten-Anlage, also aus derjenigen, die mit frischem Extraktionsgut beaufschlagt wird, abgezogen. Frisches Lösemittel dagegen wird der letzten Extraktionseinheit aufgegeben, aus der auch das extrahierte Gut abgezogen wird.

Entscheidend für ein glattes Ineinandergreifen mehrerer Einzelextrakteure im Verbund einer Mehreinheiten-Anlage ist die Forderung, daß frisches Lösemittel grundsätzlich in die letzte Einheit eingespeist und somit mit bereits abgereichertem Extraktionsgut in Kontakt gebracht wird. Die schwach angereicherte Miscella (Extrakt) der letzten Extraktionseinheit erfährt in der vorletzten Einheit eine weitere Zunahme an Konzentration durch Kontakt mit weniger stark abgereichertem Extraktionsgut usw.

Bei allen diesen Vorgängen erfolgt Gleichstromextraktion, d. h., frisches Lösemittel (in der letzten Einheit) bzw. stufenweise angereichertes Lösemittel (Miscella) werden in gleicher Richtung wie das Extraktionsgut geführt, also im Gleichstrom durch die Gesamtanlage, unabhängig von der Anzahl der Extraktionseinheiten innerhalb der Anlage.

Es versteht sich, daß innerhalb einer derartigen Mehreinheiten-Anlage die einzelnen Extraktionseinheiten unterschiedliche Kapazität, bzw. unterschiedliches Volumen bei unterschiedlicher Drehgeschwindigkeit (Fördergeschwindigkeit) der Schnecke oder unterschiedlichem Gangabstand der Schnecke usw. aufweisen können. Dies kann z. B. insbesondere für die erste und letzte Einheit einer Anlage von Bedeutung sein.

Bei Anlagen mit mehreren Extraktionseinheiten haben sich vier derartige Einheiten im praktischen Betrieb besonders bewährt.

Die Erfindung betrifft auch ein Verfahren zur kontinuierlichen Extraktion insbesondere ölhaltiger pflanzlicher Rohstoffe mit organischen Lösemitteln, dadurch gekennzeichnet, das Extraktionsgut und das Lösemittel bzw. Miscella im Gleichstrom miteinander durch eine in einem Behälter oder Wanne angeordnete Förderschnecke mit in Richtung des Materialtransports sich erweiternden, die Kontaktzeit zwischen Lösemittel und/oder Miscella sowie Extraktionsgut bestimmenden, Schnecken-Gangabständen vermischt, vollkommen benetzt und nach Erreichen einer vorgegebenen Kontaktzeit aus dem System voneinander getrennt ausgebracht werden.

Die Benetzung des Extraktionsguts mit Lösemittel und/oder Miscella erfolgt dadurch bereits in kürzester Zeit vollkommen, auch bei Mengenverhältnissen von Extraktionsgut zu Lösemittel und/oder Miscella von 1 : 1 oder > 1 : 1. Das neue Verfahren fordert eine Trennung von Miscella und Extraktionsgut bereits in der Schneckeneinheit, was durch einen siebartigen oder perforierten Endteil des Bodens des Schneckenbehälters bzw. -wanne ermöglicht wird.

Das Verfahren kann auch im Verbund von mehreren Extraktionseinheiten betrieben werden. Dabei wird frisches Lösemittel einer letzten Extraktionseinheit aufgegeben, die der letzten Extraktionseinheit entnommene Miscella in die vorletzte Einheit rückgeführt usw., und die Miscella der ersten Extraktionseinheit zur Weiterverarbeitung bzw. Trennung (Öl/Lösemittel) abgezogen. Besonders bewährt hat sich dieses Verfahren für vier Extraktionseinheiten im Verbund.

Wie bereits einleitend gesagt, liegt ein Schwerpunkt des neuen Verfahrens in der Tatsache, daß in jeder Extraktionseinheit der Extrakt, z. B. Öl, vom Extraktionsgut in eine Lösemittel- und/oder Miscella-Phase geringerer Konzentration übergehen kann. Enthält das Extraktionsgut z. B. 20 Gew.% Öl und beträgt das Ansatzverhältnis Extraktionsgut/Frischlösungsmittel etwa 1 : 1 so erhöht sich bei einer Anlage mit mehreren Extraktionseinheiten die Konzentration der Miscella von Einheit zu Einheit um jeweils das 2,5- bis 3-fache. Da sich erfindungsgemäß die Miscella einer vorausgehenden Extraktionsstufe nicht mit der Miscella der nachfolgenden Extraktionseinheit vermischt, bevor der Kontakt mit dem Extraktionsgut erfolgt, ist das Konzentrationsgefälle der aufgegebenen Miscella zur Konzentration der im Extraktionsgut noch vorhandenen Extraktanteile besonders hoch, was zu einer erheblichen Verkürzung der Extraktionszeit führt. Insbesondere bei Extraktionseinheiten und -anlagen für z. B. Sojamaterial mit ca. 20 Gew.% Ölgehalt, die bei Extraktionsgutdurchsätzen von bis zu 3 500 t/24 Std. Extraktionszeiten von 40 bis 60 Min. erfordern. kann durch Einsatz der Vorrichtung und Anlage der Erfindung die Extraktionszeit um ca. 50 % verkürzt werden.

Auch die Konstruktion der erfindungsgemäßen Extraktionseinheiten weist erhebliche insbes. apparatetechnische Vorteile auf. Großextrakteure bisheriger Bauart, wie sie einleitend genannt sind, können ab einer Leistung von 400 bis 600 t/24 Std. nicht mehr als transportfähige Einheiten gebaut werden, vielmehr sind sie nur als Teileelemente zur Betriebsstelle transportierbar und müssen dort zur Gesamteinheit zusammengesetzt werden. Demgegenüber können die relativ kompakten und wenig sperrigen Extrakteure gemäß der Erfindung in der Apparatebaufabrik komplett gefertigt und als solche an der Betriebsstelle direkt eingesetzt werden, wobei mehrere Einheiten auf einfachste Weise zu einer Mehreinheiten-Anlage gekoppelt werden können.

Es hat sich als besonders vorteilhaft erwiesen, wenn die Schnecke der Extraktionseinheit als Doppelschnecke mit ineinandergreifenden Schneckengängen ausgebildet ist. Hierdurch wird eine besonders gute und schnelle Kontaktierung zwischen Extraktionsgut und Lösemittel und/oder Miscella erreicht.

Der äußerst kompakte Extrakteur gemäß der Erfindung ist in Länge und Kapazität beliebig variierbar.

5

Er kann somit in beliebigen Größen fabrikmäßig, serienmäßig fertiggestellt werden. Außerdem kann er den besonderen Gegebenheiten des Extraktionsguts (Herkunft, Ölgehalt, pflanzlicher Aufbau etc.) angepaßt werden.

Der durch den ganz spezifischen Aufbau der Vorrichtung (Extrakteur) erreichte optimale Kontakt zwischen Extraktionsgut und Lösemittel und/oder Miscella, der zu einer frühen Homogenisierung der eingebrachten Stoffe im engeren Gangabstandsbereich der Schnecke führt und von hier zu einer allmählich sich beruhigenden Zone mit erweiterten Gangabständen der Schnecke weiterleitet, hat eine meßbar verbesserte Extraktionswirkung zur Folge, die nicht nur durch die vorstehend erwähnte Zeitverminderung zum Ausdruck kommt, sondern auch ein ausextrahiertes Gut liefert, dessen Gehalt an Lösemittel erheblich herabgesetzt ist.

Die Miscella fließt vor dem Austrag des Extraktionsguts kontinuierlich ab, was die Ausschaltung zusätzlicher Filtereinheiten vor der Entbenzinierung des Extraktionsgut-Rückstandes (Schrot) erlaubt. Das Schrot ist fast trocken, der Aufwand für die Entbenziierung (Apparate-, Personal- und Energieaufwand) wesentlich vermindert.

Es hat sich weiter gezeigt, daß der neue Extrakteur auch solche Materialien zu extrahieren in der Lage ist, die nur schwer perkolieren, weil die Extraktion bevorzugt im Bereich der Schnecke mit geringem Gangabstand erfolgt, wo das Extraktionsgut im Lösemittel echt suspendiert ist. Im Bereich des perforierten Wannenbodens der Extrantionseinheit kann das auf dem Extraktionsmaterial stehende Lösemittel bzw. Miscella seitwärts durch die Sieböffnungen bzw. Perforierung in erheblichem Maße abfließen.

Schließlich ist zu bemerken, daß die apparative Gestaltung der Vorrichtung (Extrakteur) auch eine höhere Sicherheit für das Betriebspersonal ergibt. Außer der Schnecke werden im Extrakteur bzw. in dessen Gasraum keine mechanisch aufeinander einwirkenden Teile wie Rollen, Lager, Ketten usw. bewegt. Die bisher an bekannten Großraum-Extrakteuren beobachtete und nicht zu verhindernde Einwirkung metallener Teile aufeinander, die zur Funkenausbildung und damit zu Explosionen und Bränden führen kann, tritt bei der Vorrichtung gemäß der Erfindung nicht auf.

Zu bemerken ist noch, daß eine Schmierung mechanisch bewegter Teile innerhalb des Extraktionsraums entfällt. Eine Verunreinigung des Extrakts durch Schmiermittel ist daher ausgeschlossen.

Die Erfindung wird nachfolgend an Hand der Figuren 1-4, die den Aufbau der erfindungsgemäßen Extraktionsvorrichtung schematisch wiedergeben, näher erläutert.

Es zeigen :

Figur 1  eine Ausführung der Extraktionsvorrichtung im Schnitt ;

Figur 2  den Extrakteur gemäß Fig. 1 im Schnitt II-II ;

Figur 3  den gleichen Extrakteur im Schnitt II-II, jedoch mit zwei ineinandergreifenden Schneckeneinheiten ;

Figur 4  eine schematische Darstellung einer Extraktionsanlage mit vier Extraktionseinheiten nach Fig. 1.

Fig. 1 zeigt den neuen Extrakteur in seiner einfachsten Ausführung schematisch dargestellt. Er besteht im wesentlichen aus der Schnecke 1 mit den Schneckengängen 3, die am Ort der Einbringung des Rohmaterials (Stutzen 9) ihren geringsten Gangabstand aufweisen. Dieser Gangabstand erweitert sich stetig und erreicht am gegenüberliegenden Ende in Höhe des Schrotaustrags 6 seinen größten Wert.

Die Schnecke 1 ist in einem Trog oder Wanne 2 geführt, deren Boden von den Spitzen der Schneckengänge nur einen geringen Abstand, etwa von wenigen Millimetern, aufweist. Dagegen ist der Abstand des Oberteils der Wanne 2 von den Spitzen der Schneckengänge 3 um ein Vielfaches größer.

Unmittelbar vor dem Austragsorgen 6 für das extrahierte Gut (Schrot) weist der Boden des Trogs bzw. der Wanne einen siebartigen oder perforierten Teil 4 auf, dessen Öffnungen so gewählt sind, daß die Miscella ablaufen, der Schrot aber nicht durchtreten kann. Der perforierte Teil 4 kann auswechselbar angebracht sein, um in Abhängigkeit von der Korngröße des Schrots verschiedene Öffnungsquerschnitte (Löcher, Schlitze usw.) anzubringen.

In Fig. 1 ist dieser Teil z. B. als Boden mit schlitzartigen Öffnungen dargestellt.

Der Schrot wird von der Schnecke über den Teil 4 geschoben und verläßt die Anlage mit sehr niedrigem Lösemittelgehalt über den Austrag 6, der zur Lösemittelrückgewinnung 5 weiterleitet.

Die Miscella M sammelt sich unterhalb des perforierten Teils 4 und fließt kontinuierlich zur weiteren Verarbeitung (Filtration, Klärung, Eindampfung) oder aber im Kreis geführt zur erneuten Einspeisung in den Extrakteur zurück.

Das Extraktionsgut R wird über den Anschluß 9 am Schneckenanfang eingebracht. Es versteht sich, daß Regel-, Dosier- und meßeinrichtungen, wie sie in der Verfahrenstechnik üblich sind, hier nicht im einzelnen erwähnt werden.

In Richtung des Schneckenlaufs sind direkt nach dem Anschluß (9) : auf dem Oberteil der Schneckenwanne 2 eine Vielzahl von Anschlußstutzen (10) für Lösemittel und/oder Miscella vorgesehen. Diese Stutzen können vertikal angeordnet sein und somit die jeweilige Flüssigkeit senkrecht auf das Rohmaterial führen, sie können aber auch seitlich im oberen Wannendrittel gegenüberliegend angebracht sein, so daß sich eine bessere Benetzung des Rohmaterials ergibt.

Die Anschlußstutzen 10 sind über geeignete Regelgeräte sowohl mit frischem Lösemittel als auch mit Behältern für rückgeführte Miscella verbunden. Ein geeignetes, hier nicht dargestelltes Rohr-Verbundsystem gestattet die Einspeisung von Miscella oder frischem Lösemittel an jedem Ort des Extraktionsbereichs.

Der Trog bzw. die Schneckenwanne 2 kann mit einem Dampfmantel 8 oder einer sonstigen geeigneten Wärmequelle für indirekte Beheizung ausgerüstet sein.

Entlüftungsanschlüsse 11, die ggf. zu einem Dephlegmator für verdampftes Lösemittel weiterleiten, Leitungen für die Einspeisung von Inertgas — nicht dargestellt — und zusätzliche Rohranschlüsse 12 für die Einspeisung von Lösemittel zur abschließenden Wäsche des Schrots auf dem Siebboden 4 vervollständigen die Anlage.

Es ist von Vorteil, wenn die Schnecke in einem abnehmbaren, erweiterten Teil (Kasten) 7 endet, der die beiden Entleerungsöffnungen für Schrot (Austrag 6) und Miscella 5 einschließt.

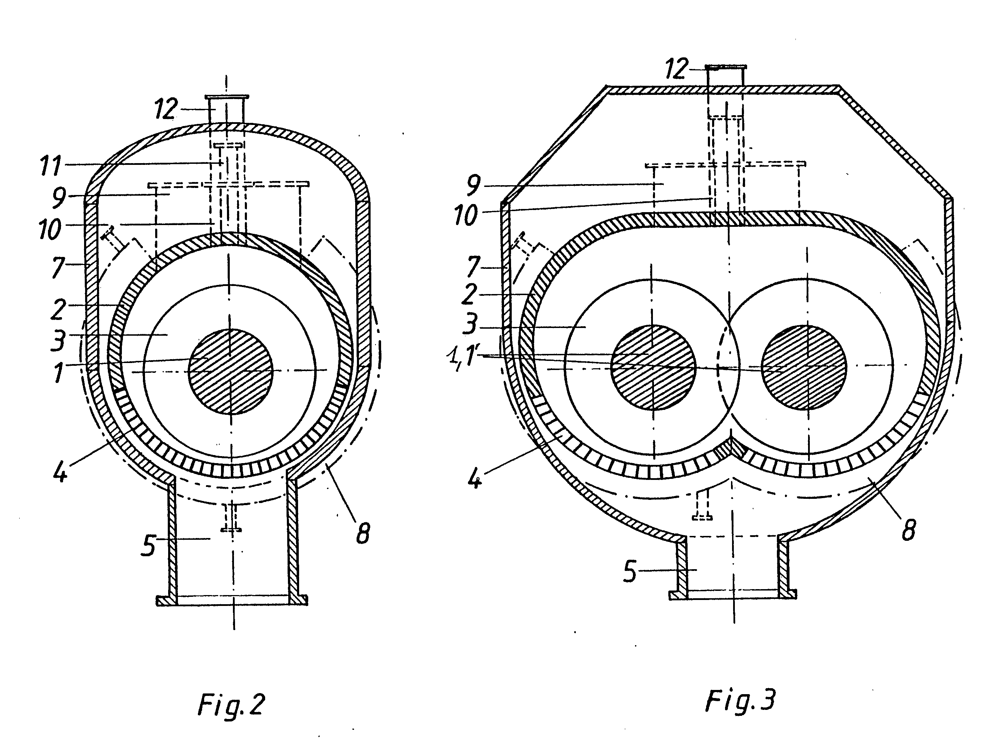

Fig. 2 zeigt den Extrakteur nach Fig. 1 im Schnitt nach II-II.

Schließlich zeigt Fig. 3 noch eine besonders vorteilhafte Konstruktion mit zwei ineinandergreifenden Schnecken 1, 1', die im gemeinsamen Trog 2 mit perforiertem Teil 4 am Trogende angeordnet sind. Auch diese Schnecken haben selbstverständlich den für die Erfindung bedeutungsvollen Änderungsfaktor für den Abstand der Schneckengänge.

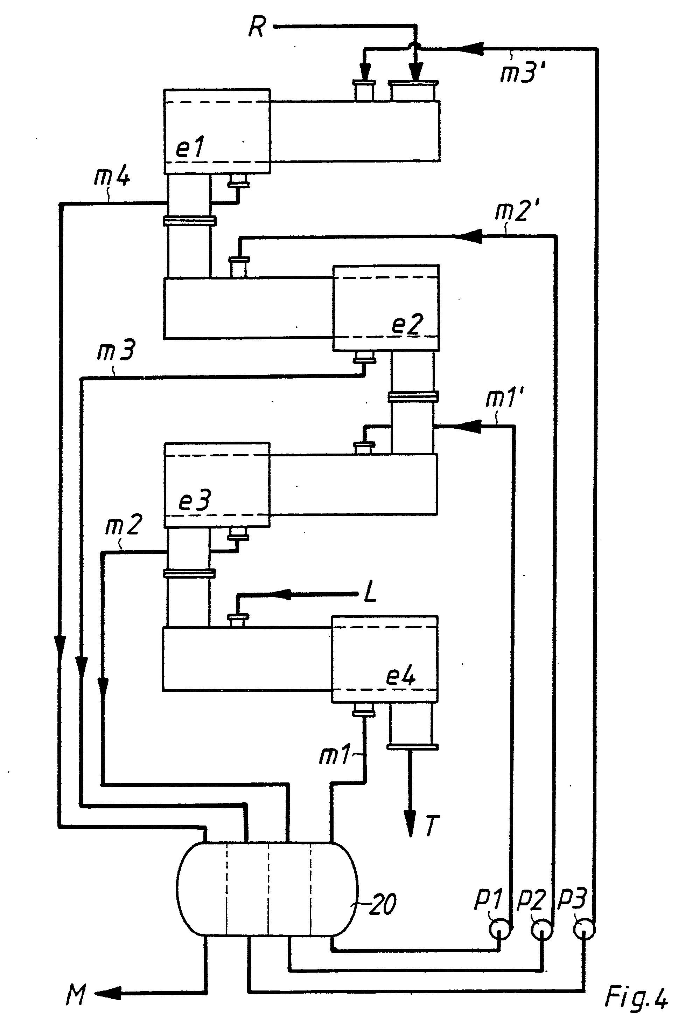

Das in Fig. 4 am Beispiel einer Anlage mit vier Extraktionseinheiten e1, e2, e3, e4 dargestellte System ist im speziellen Falle übereinander angeordnet. Die Extraktionseinheiten e1, e2, e3, e4 sind im Prinzip mit den Vorrichtungen gemäß Figuren 1-3 identisch.

Der Ausgang des Extraktionsguts einer jeden Extraktionseinheit — mit Ausnahme der vierten und letzten Einheit — steht unmittelbar mit dem Eingang für Extraktionsgut der nachfolgenden Extraktionseinheit in Verbindung, d. h. die Stutzen 6 und 9 jeder Einheit sind mit den Stutzen 9 bzw. 6 einer vorausgehenden Einheit gekoppelt bzw. umgekehrt.

Hierdurch bedingt wird ein kontinuierlicher, völlig abgeschlossener Materialfluß durch alle Extraktionseinheiten bis zum Austrag T aus der vierten und letzten Einheit erreicht. Dieser Materialfluß erfolgt allein durch die Schwerkraft mit Unterstützung der in den Extraktionseinheiten arbeitenden Schnecken.

Gemäß Fig. 4 wird das getrocknete und zerkleinerte frische Extraktionsgut, z. B. Sojabohnenmaterial (Sojaflocken), über R in die erste, im speziellen vorliegenden Fall oberste Extraktionseinheit e1 kontinuierlich eingebracht und mit der Miscella m3' aus der nachfolgenden, tieferliegenden zweiten Extraktionseinheit e2 benetzt und vermischt. Diese Miscella m3' fließt durch den Siebboden bzw. den perforierten Teil 4 von e2 — vergl. Figur 1 — kontinuierlich ab und gelangt über Leitung m3 in eine Teilkammer bzw. Teilvorlage des Sammelbehälters 20. Von hier wird sie ohne Vermischung oder Verdünnung durch Miscella aus anderen Extraktionseinheiten oder durch frisches Lösemitel über die Pumpe p3 in die Extraktionseinheit e1 eingebracht, wo sie mit frischem Extraktionsgut R kontaktiert, dieses vollkommen benetzt und den Öl-Abreicherungsprozeß aus dem frischen Extraktionsgut einleitet. Der Extraktions- bzw. Abreicherungsprozeß verläuft im Gleichstrom.

Die aus der dritten Extraktionseinheit e3 abfließende Miscella gelangt über Leitung m2 ebenfalls in eine Teilkammer bzw. Teilvorlage des Behälters 20. Sie wird dann durch die Pumpe p2 übernommen und über Leitung m2' der zweiten Extraktionseinheit e2 aufgegeben. Hier erfolgt der gleiche Vorgang wie in e1, jedoch mit schwach abgereichertem Extraktionsgut und angereicherter Miscella als Reaktionskomponenten. Erneut erfolgt der Extraktionsprozeß im Gleichstrom in einem völlig abgeschlossenen System.

In gleicher Weise gelangt die Miscella aus der vierten und in diesem Falle letzten Extraktionsstufe e4 über m1, eine Teilkammer bzw. Teilvorlage des Behälters 20, Pumpe p1 und Leitung m1' in die dritte Extraktionseinheit e3.

Der Miscella-Kreislauf schließt sich durch eine vierte Teilkammer des Behälters 20, in die die konzentrierte Miscella aus e1 über Leitung m4 kontinuierlich abfließt, um einen nachgeschalteten Aufbereitungssystem M zur Trennung von Öl und Lösemittel zugeführt zu werden.

Das ölfreie bzw. ölabgereicherte Extraktionsgut (Schrot) verläßt die Anlage durch den Schrotaustrag 6 — siehe Figur 1 — der letzten, vierten Extraktionseinheit e4 und gelangt anschließend zu einer Aufbereitung (Entbenzinierung, Toaster etc.) T.

Frisches Lösemittel tritt über die oder einen der Stutzen 10 — siehe Figur 1 — in die letzte und vierte Extraktionseinheit e4 in den Prozeß ein und beginnt den Kreislauf nach e3, e2 usw. Durch diese am Beispiel einer Vierstufenanlage dargestellte Verfahrensweise reichert sich das Lösemittel stufenweise, jedoch kontinuierlich und ohne eine Verdünnung durch überlaufende Miscella anderer Stufen zu erfahren, an. Die Anreicharung des Lösemittels an Extrakt (Öl) findet in der Reihenfolge e4-e1 statt, während die Abreicherung des Extraktionsguts an Öl in umgekehrter Reihenfolge e1-e4 verläuft.

Es wurde bereits gesagt, daß durch die Regulierbarkeit der Schneckendrehzahl, des Gangabstands und der Art des Gangabstands (stetige oder gruppenweise Erweiterung) sowie durch nicht dargestellte Verschlußelemente (Schieber, Ventile usw.) an den Stutzen 5, 6, 9, 10 die Verweilzeit des Extraktionsguts und der Miscella in den einzelnen Extraktionseinheiten und damit innerhalb der Gesamtanlage beliebig variiert werden kann.

Dies hat ber auch zur Folge, daß der neue Extrakteur auch den Einsatz von Lösemitteln mit niedrigen Siedebereichen und niedrigen Molekulargewichten erlaubt, die bekanntlich intensiver durch die Zellmembranen der Rohstoffe diffundieren. Hierdurch wird der seit langem angestrebten Extraktion mit Hilfe sehr niedrig siedender Lösemittel erstmals ein praktischer Weg geboten.

## 0 076 871

**Patentansprüche**

1. Vorrichtung zur kontinuierlichen Extraktion insbesondere ölhaltiger pflanzlicher Rohstoffe mit organischen Lösemitteln, bestehend aus einer in einem Behälter angeordneten Förderschnecke, die horizontal oder in Förderrichtung ansteigend ausgerichtet ist, deren Schneckengänge (3) am Ort des Eingangs des Extraktionsguts (R) den kleinsten Abstand aufweisen, der sich in Richtung des Ausgangs des extrahierten Guts erweitert und an diesem Ausgang den größten Wert aufweist, und wobei der Ablauf des Extrakts aus dem die Schnecke aufnehmenden Behälter (2) über eine Siebeinrichtung erfolgt, dadurch gekennzeichnet, daß sich der Abstand der Gänge (3) der Schnecke (1) in Förderrichtung der Schnecke stetig erweitert, daß ferner unmittelbar vor dem Austragsorgan (6) für des extrahierte Gut ein Teil (4) des Bodens der Schneckenwanne (2) siebartig oder perforiert ausgebildet ist, und dieser Teil (4) mit einer Ableitung (5) für den Extrakt bzw. die Miscella in unmittelbarer Verbindung steht, und daß die allseitig geschlossene Schneckenwanne (2), beginnend beim Eingang des Extraktionsguts (R) in Förderrichtung der Schnecke eine Vielzahl von Anschlußstutzen (10) für Lösemittel und/oder Miscella (M + S) aufweist, die entweder nacheinander in Reihe oder schräg gegenüberliegend, sowie im ersten Drittel der Schnecke gegenüber den beiden verbleibenden Dritteln der Schnecke dichter hintereinander angeordnet sind.

2. Vorrichtung nach Anspruch 1, dadurch gekennzeichnet, daß der siebartige oder perforierte Teil (4) des Wannenbodens (2) auswechselbar ist.

3. Vorrichtung nach Ansprüchen 1 oder 2, dadurch gekennzeichnet, daß die Schnecke (1) als ineinandergreifende Doppelschnecke (1, 1') ausgebildet ist.

4. Vorrichtung nach Ansprüchen 1-3, dadurch gekennzeichnet, daß über die gesamte Schneckenlänge oder über Teilbereiche der Schneckenlänge zusätzlich zu den transportierenden Schneckenblättern Rührelemente vorgesehen sind.

5. Anlage zur kontinuierlichen Extraktion insbesondere ölhaltiger pflanzlicher Rohstoffe mit organischen Lösemitteln, dadurch gekennzeichnet, daß mindestens zwei Extraktionseinheiten gemäß einem der Ansprüche 1 bis 4 im Verbund hinter- bzw. untereinander geschaltet sind, wobei der Ausgang (6) des Extraktionsguts der ersten Extraktionseinheit (e1) in den Eingang für Extraktionsgut der nachfolgenden Extraktionseinheit (e2...) mündet und die Miscella aller einzelnen Extraktionseinheiten (e1, e2, e3, e4...) getrennt voneinander über Leitungen (m1, m2, m3, m4...) mit den Teilkammern einer Vorlage (20) oder mit einzelnen, voneinander getrennten Vorlagen in Verbindung steht, und die Teilkammern bzw. Vorlagen der Leitungen (m1, m2, m3...) über Pumpen (p1, p2, p3...) mit den Rückführleitungen (m1', m2', m3'...) zu den Extraktionseinheiten (e3, e2, e1...) in Verbindung stehen, während die Teilkammer bzw. Vorlage der Leitung (m4) zur Miscellaaufbereitung (M) weiterleitet.

6. Anlage nach Anspruch 5, dadurch gekennzeichnet, daß vier Extraktionseinheiten (e1/m4, e2/m3, e3/m2 und e4/m1) vorgesehen sind, die Miscellaabläufe (m4, m3, m2, m1) in getrennte Vorlagen einmünden und diese über Pumpen (p1 für m1, p2 für m2, p3 für m3) und Rückführleitungen (m1', m2', m3') mit den Extraktionseinheiten (e3, e2, e1) in Verbindung stehen, während die letzte Extraktionseinheit (e4) an die Zufuhr für frisches Lösemittel (L) angeschlossen ist.

7. Verfahren zur kontinuierlichen Extraktion insbesondere ölhaltiger pflanzlicher Rohstoffe mit organischen Lösemitteln, dadurch gekennzeichnet, daß das Extraktionsgut und das Lösemittel bzw. Miscella im Gleichstrom miteinander durch eine in einem Behälter oder Wanne angeordnete Förderschnecke mit in Richtung des Materialtransports sich erweiternden, die Kontaktzeit zwischen Lösemittel und/oder Miscella sowie Extraktionsgut bestimmenden, Schnecken-Gangabständen vermischt, vollkommen benetzt und nach Erreichen einer vorgegebenen Kontaktzeit aus dem System voneinander getrennt ausgebracht werden.

8. Verfahren nach Anspruch 7, dadurch gekennzeichnet, daß das Extraktionsgut im Gleichstrom mit Lösemittel und/oder Miscella durch mehrere, aus Förderschnecke mit in Richtung des Materialtransports sich erweiternden Schnecken-Gangabständen und Schneckenbehälter oder -wanne mit siebartig oder perforiert ausgeführtem Endabschnitt bestehenden Extraktionseinheiten geführt wird, frisches Lösemittel der letzten Extraktionseinheit aufgegeben wird, die der letzten Extraktionseinheit entnommene Miscella in die vorletzte Extraktionseinheit eingebracht wird usw., und die Miscella der ersten Extraktionseinheit zur Weiterverarbeitung bzw. zur Trennung von Öl und Lösemittel abgezogen wird.

9. Anwendung der Vorrichtung, Anlage und des Verfahrens gemäß Ansprüchen 1-8 auf die kontinuierliche Extraktion von Ölsaaten und Ölfrüchten.


**Claims**

1. Apparatus for the continuous extraction of vegetable raw materials, particularly such containing oil, by means of organic solvents, comprising a conveyor screw arranged within a vessel, said conveyor screw being aligned either horizontally or upwardly inclined in the conveying direction, the flights (3) of said screw having the smallest pitch at the feed point of the extraction material (R) and widening towards the discharge point of the extracted material to have the greatest value at said discharge point, and wherein the extract is discharges via a straining device from the vessel (2) containing the screw, characterized by the fact that the pitch of the flights (3) of the screw (1) continuously widens in the conveying direction of the screw, furthermore that a portion (4) of the bottom of the screw trough (2) located immediately before the discharge member (6) for the extracted material is of screen-like or perforated design, said portion (4) being directly connected to an outlet (5) for the extract or miscella, and that the screw through (2), which is closed on all sides, has a multiplicity of connecting branches (10) for solvents and/or miscella (M + S) beginning at the feed point for the extraction material (R) and continuing in the conveying direction of the conveyor screw, said branches being arranged either consecutively or obliquely in relation to each other and more closely juxtaposed in the first third of the screw than in the two remaining thirds of the screw.

2. Apparatus according to Claim 1, characterized by the fact that the screen-like or perforated portion (4) of the trough floor (2) is interchangeable.

3. Apparatus according to either one of Claims 1 or 2, characterized by the fact that the screw (1) is designed as an intermeshing twin screw (1, 1').

4. Apparatus according to claims 1 to 3, characterized by the fact that agitating elements are provided along the entire length or part lenghts of the screw in addition to the conveying blades of the screw.

5. Installation for the continuous extraction of vegetable raw materials, particularly such containing oil, by means of organic solvents, characterized by the fact that at least two extraction units according to one of Claims 1 to 4 are connected one behind or below the other in such a manner that the extraction material discharge point (6) of the first extraction unit (e1) leads into the extraction material feed point of the next extraction unit (e2...), and that the miscella from each individual extraction unit (e1, e2, e3, e4...) communicates separately via lines (m1, m2, m3, m4...) with the sectional chambers of a receiver (20) or with individual, separate receivers, said sectional chambers or receivers allocated to the lines (m1, m2, m3...) communicating via pumps (p1, p2, p3...) with the return lines (m1', m2', m3'...) with the extraction units (e3, e2, e1...), while the sectional chamber or receiver allocated to the line (m4) carries the miscella away for processing (M).

6. Installation according the Claim 5, characterized by the fact that four extraction units (e1/m4, e2/m3, e3/m2 and e4/m1) are provided, that the miscella discharge lines (m4, m3, m2, m1) lead into separate receivers, said receivers communicating via pumps (p1 for m1, p2 for m2, p3 for m3) and return lines (m1', m2',m3') with the extraction units (e3, e2, e1), while the last extraction unit (e4) is connected to the supply line for fresh solvent (L).

7. Process for the continuous extraction of vegetable raw materials, particularly such containing oil, by means of organic solvents, characterized by the fact that the extraction material and the solvent or miscella are mixed with one another in co-current manner by means of a conveyor screw located in a vessel or through and having screw flight pitches which widen in the direction of the transport of material and determine the duration of contact between solvent and/or miscella and the extraction material, completely wetting the extraction material and the solvent or miscella and discharging them from the system after a given contact time has been reached.

8. Process according to Claim 7, characterized by the fact that the extraction material is passed in co-current manner with solvent and/or miscella through several extraction units comprising a conveyor screw with screw flight pitches which widen in the direction of the transport of material and a screw vessel or trough having an end section of screen-like or perforated design, that fresh solvent is supplied to the last extraction unit, that the miscella removed from the last extraction unit is fed to the penultimate extraction unit and so forth, and that the miscella from the first extraction unit is drawn off for further processing or for the purpose of separating oil and solvent.

9. Use of the apparatus, the installation and the process according to Claims 1 to 8 for the continuous extraction of oil seeds and oleiferous crops.

**Revendications**

1. Dispositif pour l'extraction continue, plus particulièrement de matières premières ou matières brutes végétales oléagineuses, par des solvants organiques, qui se compose d'une vis d'alimentation ou de progression disposée dans une cage, qui est agencée horizontalement ou de manière ascendante dans la direction de progression, dont les spires (3), à l'endroit de l'introduction du produit à soumettre à l'extraction (R), présentent la plus petite distance entre-elles, laquelle distance ou pas s'élargit en direction de la sortie du produit extrait et présente la plus grande valeur à cette sortie et où la décharge de l'extrait sortant de la cage (2) recevant la vis s'effectue sur un dispositif de tamisage ou criblage, caractérisé en ce que la distance des spires ou pas (3) de la vis (1) s'élargit constamment dans la direction de progression de la vis, immédiatement avant l'organe de décharge (6) pour le produit extrait, une partie (4) du fond de la cage ou carter (2) de la vis est réalisée en forme de tamis ou de crible ou est perforée et cette partie (4) est en communication immédiatement avec une conduite d'évacuation (5) pour l'extrait ou les miscellas et en ce que le carter (2) de la vis, fermé de tous côtés, présente, en commençant depuis l'entrée du produit à soumettre à l'extraction (R) en direction de progression de la vis, une multiplicité de tuyaux ou tubes de raccord (10) destinés au solvant et/ou au miscella (M + S), qui sont disposés, soit en rangée l'une à la suite de l'autre, soit obliquement opposés l'un par rapport à l'autre et de façon plus serrée dans le premier tiers de la vis que dans les deux autres.

2. Dispositif suivant la revendication 1, caractérisé en ce que la partie (4) en forme de tamis ou crible ou perforée du fond du carter (2) est échangeable.

3. Dispositif suivant l'une quelconque des revendications 1 et 2, caractérisé en ce que la vis (1) est construite sous forme de vis double (1, 1') à spires engrenantes.

4. Dispositif suivant l'une quelconque des revendications 1 à 3, caractérisé en ce que des éléments agitateurs sont prévus au-dessus de la longueur totale de la vis ou au-dessus de zones partielles de la longueur de la vis, en complément des lames ou spires transporteuses de la vis.

5. Installation pour l'extraction continue, plus particulièrement de matières premières ou matières brutes végétales oléagineuses, à l'aide de solvants organiques, caractérisée en ce qu'au moins deux unités d'extraction suivant l'une quelconque des revendications 1 à 4 sont raccordées l'une à la suite de l'autre ou en parallèle, où la sortie (6) du produit d'extraction de la première unité d'extraction (e1) débouche dans l'entrée destinée au produit d'extraction de l'unité d'extraction suivante (e2...) et les micellas de toutes les unités d'extraction individuelles (e1, e2, e3, e4...) sont, séparément les uns des autres, en communication par l'intermédiaire de conduites (m1, m2, m3, m4...) avec les chambres partielles d'un réservoir (20) ou avec des réservoirs individuels, séparés les uns des autres et les chambres partielles ou les réservoirs correspondant aux conduites (m1, m2, m3...) sont en communication par l'intermédiaire de pompes (p1, p2, p3...) avec des conduites de recyclage (m1', m2', m3'...) aux unités d'extraction (e3, e2, e1...), tandis que la chambre partielle ou le réservoir correspondant à la conduite (m4) conduit au traitement ou à la préparation du miscella (M).

6. Installation suivant la revendication 5, caractérisée en ce que sont prévues 4 unités d'extraction (e1/m4, e2/m3, e3/m2 et e4/m1), les décharges de miscellas (m4, m3, m2, m1) débouchent dans des réservoirs séparés et ceux-ci sont en communication par l'intermédiaire de pompes (p1 pour m1, p2 pour m2, p3 pour m3) et des conduites de recyclage (m1', m2', m3') avec les unités d'extraction (e3, e2, e1), tandis que la dernière unité d'extraction (e4) est raccordée à la conduite d'alimentation en solvant frais (L).

7. Procédé d'extraction continue, plus particulièrement de matières premières ou matières brutes végétales oléagineuses, à l'aide de solvants organiques, caractérisé en ce que l'on mélange et mouille totalement le produit d'extraction et le solvant ou le miscella en équicourant mutuel, à l'aide d'une vis de progression agencée dans une cage ou un carter avec des pas ou distances des spires de la vis allant en s'élargissant en direction du transport de la matière et déterminant la durée de contact entre le solvant et/ou le miscella comme aussi le produit d'extraction et les fait sortir séparément les uns des autres du système après avoir atteint une durée de contact pré-établie.

8. Procédé suivant la revendication 7, caractérisé en ce que le produit d'extraction est conduit en équicourant avec le solvant et/ou le miscella à travers plusieurs unités d'extraction qui se composent de vis de progression à pas ou distances des spires de la vis allant en s'élargissant en direction du transport de la matière et de carters ou cages de vis à partie terminale construite en forme de tamis ou crible ou perforée, est additionné de solvant frais de la dernière unité d'extraction, le miscella soutiré ou prélevé de la dernière unité d'extraction est introduit dans l'avant-dernière unité d'extraction, etc., et le miscella est soutiré de la première unité d'extraction en vue de son traitement ultérieur ou en vue de la séparation de l'huile et du solvant.

9. Mise en œuvre du dispositif, de l'installation et du procédé suivant l'une quelconque des revendications 1 à 8, en vue de l'extraction continue de graines et de fruits oléagineux.

Fig. 1

0 076 871

0 076 871

Fig.3

Fig.2

2

0 076 871

Fig.4